# EUROPEAN PATENT SPECIFICATION

(11) **EP 4 578 915 B1**
(45) Date of publication and mention of the grant of the patent: **19.08.2026**
(21) Application number: 23871313.5
(22) Date of filing: 13.06.2023
(51) Int. Cl.: C08G 77/04, C09K 5/14, C08L 83/04

(54) **THERMALLY CONDUCTIVE GREASE COMPOSITION**
WÄRMELEITFÄHIGE SCHMIERFETTZUSAMMENSETZUNG
COMPOSITION DE GRAISSE THERMOCONDUCTRICE

(30) Priority: 26.09.2022 JP 2022153028
(43) Date of publication of application: 02.07.2025
(73) Proprietor: Fuji Polymer Industries Co., Ltd., Nagoya-shi, Aichi 450-0002 (JP)
(72) Inventor: KATAISHI Takumi, Nagoya-shi, Aichi 463-0026 (JP)
(74) Representative: Dehns
(86) International application number: PCT/JP2023/021843
(87) International publication number: WO 2024/070068

(56) References cited:
- WO-A1-2006/064782
- WO-A1-2022/054330
- CN-A- 107 312 493
- JP-A- 2000 345 042
- JP-A- 2000 353 771
- JP-A- 2002 237 554
- JP-A- 2017 530 220
- JP-A- H07 252 130
- JP-B1- 7 047 199

## Description

### Technical Field

The present invention relates to a thermally conductive grease composition suitable for being interposed between a heat dissipating body and a heat generating body such as an electric component or electronic component.

### Background Art

In recent years, semiconductor performance in CPUs and similar devices has improved significantly, leading to a dramatic increase in heat generation. Thus, heat dissipating bodies are attached to heat generating bodies such as electric or electronic components that generate heat. For example, thermally conductive grease is used to improve adhesion between the heat dissipating bodies and the heat generating bodies such as semiconductors. Due to the size reduction, enhanced performance, and increased integration of electric components or electronic components, there is a demand for thermally conductive grease with both high thermal conductivity and the property of not easily dripping from between a heat generating body and a heat dissipating body (referred to as "drop resistance").

Patent Document 1 proposes a composition containing a thermally conductive filler, a polyorganosiloxane resin containing at least one type of polysiloxane having one curable functional group in a molecule, and a siloxane compound having an alkoxysilyl group and a linear siloxane structure. Patent Document 2 proposes a thermally conductive silicone composition that contains liquid silicone, a thermally conductive filler, and specific hydrophobic spherical silica minute particles and has an improved heat dissipation property. Patent Document 3 discloses a thermally conductive fluorine-containing adhesive composition containing alumina particles with varying particle sizes and shapes. The inventors of the present invention propose thermally conductive grease compositions containing ethylene/α-olefin copolymer in Patent Documents 4 and 5.

### Prior Art Documents

### Patent Document

[Patent Document 1] JP 2018-104714A
[Patent Document 2] JP 2016-044213A
[Patent Document 3] JP 2017-190389A
[Patent Document 4] Japanese Patent No. 7047199
[Patent Document 5] Japanese Patent No. 7095194

### Disclosure of Invention

### Problem to be Solved by the Invention

However, the thermally conductive silicone greases described in Patent Documents 1 to 3 above have a problem in that, for example, when thermally conductive silicone grease is interposed between a heat generating body and a heat dissipating body and sandwiched vertically between the heat generating body and the heat dissipating body, the thermally conductive silicone grease drips from between the heat generating body and the heat dissipating body. Furthermore, the thermally conductive grease compositions described in Patent Documents 4 and 5 above have a problem in that they exhibit a higher viscosity compared to that of thermally conductive silicone grease.

In order to solve the above-described conventional problems, the present invention provides a thermally conductive grease composition that has low viscosity yet is less likely to drip, and also has high thermal conductivity.

### Means for Solving Problem

A thermally conductive grease composition according to the present invention is a thermally conductive grease composition containing: a matrix resin; and a thermally conductive filler.

The matrix resin contains a liquid dimethylpolysiloxane (A) having a kinematic viscosity of 100 to 10,000 mm²/s at 40°C and an ethylene-propylene copolymer (B) having a kinematic viscosity of 1 to 10,000 mm²/s at 40°C.

The matrix resin contains the liquid dimethylpolysiloxane (A) in an amount of 50 parts by mass or more and 97 parts by mass or less and the ethylene-propylene copolymer (B) in an amount of 3 parts by mass or more and 50 parts by mass or less where a total amount of the liquid dimethylpolysiloxane (A) and the ethylene-propylene copolymer (B) is 100 parts by mass.

The thermally conductive filler is contained in an amount of 400 to 2500 parts by mass with respect to 100 parts by mass of the total amount of the liquid dimethylpolysiloxane (A) and the ethylene-propylene copolymer (B).

### Effects of the Invention

The present invention can provide a thermally conductive grease composition containing: a matrix resin; and a thermally conductive filler. The matrix resin contains a liquid dimethylpolysiloxane (A) having a kinematic viscosity in a range from 100 to 10,000 mm²/s at 40°C and an ethylene-propylene copolymer (B) having a kinematic viscosity in a range from 1 to 10,000 mm²/s at 40°C. The matrix resin contains the liquid dimethylpolysiloxane (A) in an amount in a range from 50 parts by mass to 97 parts by mass and the ethylene-propylene copolymer (B) in an amount in a range from 3 parts by mass to 50 parts by mass, where a total amount of the liquid dimethylpolysiloxane (A) and the ethylene-propylene copolymer (B) is 100 parts by mass. The thermally conductive filler is present in an amount in a range from 400 to 2500 parts by mass with respect to 100 parts by mass of the total amount of the liquid dimethylpolysiloxane (A) and the ethylene-propylene copolymer (B). Accordingly, with these features, the thermally conductive grease composition of the present invention can have low viscosity yet be less likely to drip, and also have high thermal conductivity.

### Brief Description of Drawings

[FIG. 1] FIGS. 1A and 1B are diagrams illustrating a method for measuring thermal conductivity of a sample in examples of the present invention.
[FIG. 2] FIGS. 2A to 2D are schematic diagrams illustrating a drop test used in examples of the present invention.

### Description of the Invention

The present invention relates to a thermally conductive grease composition hereinafter, may simply be referred to as "grease composition" containing a matrix resin and a thermally conductive filler. The matrix resin contains a liquid dimethylpolysiloxane (A) having a kinematic viscosity of 100 to 10,000 mm²/s at 40°C and an ethylene-propylene copolymer (B) having a kinematic viscosity of 1 to 10,000 mm²/s at 40°C. The liquid dimethylpolysiloxane (A) exhibits high heat resistance, and the ethylene-propylene copolymer (B) demonstrates a tendency to harden at high temperatures. Thus, by using the liquid dimethylpolysiloxane and the ethylene-propylene copolymer in combination at a specific ratio, the heat resistance of the grease composition can be ensured, and the grease composition hardens as appropriate at high temperatures, thereby preventing dripping of the grease composition. The kinematic viscosity of the liquid dimethylpolysiloxane (A) at 40°C is preferably 100 to 5000 mm²/s, more preferably 100 to 3000 mm²/s, even more preferably 100 to 1000 mm²/s, further preferably 100 to 400 mm²/s, and further more preferably 100 to 200 mm²/s. The kinematic viscosity of the ethylene-propylene copolymer (B) at 40°C is preferably 10 to 5000 mm²/s, more preferably 100 to 1000 mm²/s, even more preferably 100 to 800 mm²/s, further preferably 100 to 500 mm²/s, and further more preferably 100 to 300 mm²/s. As a result, the grease composition according to the present invention has high heat resistance and low viscosity, yet is less likely to drip when sandwiched vertically.

The ethylene-propylene copolymer (B) is a hydrocarbon-based synthetic oil containing no polar groups. Examples of commercially available hydrocarbon-based synthetic oils include the trade name "LUCANT" series manufactured by Mitsui Chemicals, Inc. The density of the ethylene-propylene copolymer is preferably 0.83 to 0.85 g/cm³, which is advantageous in reducing the specific gravity of the grease composition. The units derived from ethylene and the units derived from propylene in the ethylene-propylene copolymer (B) may be arranged as blocks or at random.

The content of the thermally conductive filler is 400 to 2500 parts by mass, preferably 600 to 2400 parts by mass, more preferably 800 to 2400 parts by mass, and even more preferably 1000 to 2400 parts by mass, where the total amount of the liquid dimethylpolysiloxane (A) and the ethylene-propylene copolymer (B) is 100 parts by mass. As a result, the grease composition can have low viscosity, yet be less likely to drip, and have high thermal conductivity.

When the total amount of the liquid dimethylpolysiloxane (A) and the ethylene-propylene copolymer (B) is 100 parts by mass, the content of the liquid dimethylpolysiloxane (A) is 50 parts by mass or more and 97 parts by mass or less, and the content of the ethylene-propylene copolymer (B) is 3 parts by mass or more and 50 parts by mass or less. Preferably, the content of the liquid dimethylpolysiloxane (A) is 55 parts by mass or more and 95 parts by mass or less, and the content of the ethylene-propylene copolymer (B) is 5 parts by mass or more and 45 parts by mass or less. More preferably, the content of the liquid dimethylpolysiloxane (A) is 60 parts by mass or more and 94 parts by mass or less, and the content of the ethylene-propylene copolymer (B) is 6 parts by mass or more and 40 parts by mass or less. Even more preferably, the content of the liquid dimethylpolysiloxane (A) is 65 parts by mass or more and 94 parts by mass or less, and the content of the ethylene-propylene copolymer (B) is 6 parts by mass or more and 35 parts by mass or less. As a result, the grease composition has high heat resistance and low viscosity, yet is less likely to drip when sandwiched vertically.

From the viewpoint of achieving low viscosity, high thermal conductivity, and suppressing dripping of the grease composition, the thermally conductive filler contains alumina particles having a median particle size of 1 µm or more and 5 µm or less in an amount of preferably 20 to 2000 parts by mass, more preferably 100 to 600 parts by mass, and even more preferably 200 to 500 parts by mass. Furthermore, the thermally conductive filler preferably contains spherical alumina particles having a median particle size of more than 100 µm in an amount of 20 to 1500 parts by mass, aluminum nitride particles having a median particle size of 5 µm or more and 50 µm or less in an amount of 20 to 500 parts by mass, irregular pulverized alumina particles having a median particle size of 1 µm or more and 5 µm or less in an amount of 20 to 1000 parts by mass, and irregular pulverized alumina particles having a median particle size of 0.1 µm or more and less than 1 µm in an amount of 20 to 500 parts by mass. This allows small particles to be present between large particles, resulting in a nearly close-packed state. This increases thermal conductivity, and also further reduces the viscosity of the grease composition and suppresses its dripping. For similar reasons, it is more preferable that the thermally conductive filler contains spherical alumina particles having a median particle size of more than 100 µm in an amount of 500 to 1200 parts by mass, aluminum nitride particles having a median particle size of 5 µm or more and 50 µm or less in an amount of 50 to 400 parts by mass, irregular pulverized alumina particles having a median particle size of 1 µm or more and 5 µm or less in an amount of 100 to 600 parts by mass, and irregular pulverized alumina particles having a median particle size of 0.1 µm or more and less than 1 µm in an amount of 50 to 400 parts by mass. It is even more preferable that the thermally conductive filler contains spherical alumina particles having a median particle size of more than 100 µm in an amount of 700 to 1200 parts by mass, aluminum nitride particles having a median particle size of 5 µm or more and 50 µm or less in an amount of 100 to 400 parts by mass, irregular pulverized alumina particles having a median particle size of 1 µm or more and 5 µm or less in an amount of 150 to 500 parts by mass, and irregular pulverized alumina particles having a median particle size of 0.1 µm or more and less than 1 µm in an amount of 100 to 400 parts by mass. It is further preferable that the thermally conductive filler contains spherical alumina particles having a median particle size of more than 100 µm in an amount of 800 to 1100 parts by mass, aluminum nitride particles having a median particle size of 5 µm or more and 50 µm or less in an amount of 150 to 400 parts by mass, irregular pulverized alumina particles having a median particle size of 1 µm or more and 5 µm or less in an amount of 200 to 500 parts by mass, and irregular pulverized alumina particles having a median particle size of 0.1 µm or more and less than 1 µm in an amount of 100 to 400 parts by mass.

The spherical alumina particles having a median particle size of more than 100 µm are preferably spherical alumina particles that have a median particle size of more than 100 µm and 200 µm or less, and are more preferably spherical alumina particles that have a median particle size of more than 100 µm and 150 µm or less.

The aluminum nitride particles having a median particle size of 5 µm or more and 50 µm or less preferably have irregular shapes. The aluminum nitride particles having a median particle size of 5 µm or more and 50 µm or less are preferably aluminum nitride particles having a median particle size of 5 µm or more and 30 µm or less.

Note that the median particle size is the D50 (median diameter) of a volume-based cumulative particle size distribution measured through laser diffraction light scattering. An example of a measuring device therefor is the laser diffraction/scattering particle size distribution measuring device LA-950S2 manufactured by Horiba, Ltd.

The grease composition according to the present invention preferably further contains, as a viscosity modifier, an alkoxysilane compound represented by RₐSi(OR')₄₋ₐ (where R represents an unsubstituted or substituted organic group having 8 to 12 carbon atoms, R'represents an alkyl group having 1 to 4 carbon atoms, and a is 0 or 1) or a product obtained by partial hydrolysis thereof, in an amount of 0.1 to 10 parts by mass, with respect to 100 parts by mass of the total amount of the liquid dimethylpolysiloxane (A) and the ethylene-propylene copolymer (B). This makes it possible to reduce the viscosity of the grease composition.

The thermally conductive filler is preferably subjected to surface pretreatment with an alkoxysilane compound represented by RₐSi(OR')₄₋ₐ (where R represents an unsubstituted or substituted organic group having 8 to 12 carbon atoms, R' represents an alkyl group having 1 to 4 carbon atoms, and a is 0 or 1) or a product obtained by partial hydrolysis thereof. This makes it possible to reduce the viscosity of the grease composition. In particular, it is preferable that a small particle size filler having a median particle size of 0.1 µm or more and 5 µm or less is subjected to surface pretreatment.

Examples of the alkoxysilane compound include octyltrimethoxysilane, octyltriethoxysilane, decyltrimethoxysilane, decyltriethoxysilane, dodecyltrimethoxysilane, and dodecyltriethoxysilane. The alkoxysilane compounds can be used alone or in combination of two or more. An alkoxysilane compound and a siloxane having a silanol group at one end may be used in combination as a surface treatment agent. The surface treatment used here includes not only covalent bonding but also adsorption and the like. The surface-treated thermally conductive filler has improved mixability with the matrix resin.

It is preferable that the alkoxysilane compound is mixed with the thermally conductive filler in advance, and the thermally conductive filler is pretreated with the alkoxysilane compound. It is preferable to add 0.01 to 10 parts by mass of the alkoxysilane compound to 100 parts by mass of the thermally conductive filler. As a result of the thermally conductive filler being surface-treated with an alkoxysilane compound, the matrix resin is readily filled with the thermally conductive filler.

The thermal conductivity of the thermally conductive grease composition is preferably 1.0 W/m K or more and 10.0 W/m K or less, more preferably 1.5 W/m K or more and 10.0 W/m K or less, and even more preferably 2.0 W/m K or more and 10.0 W/m K or less. Such a thermally conductive grease is suitable as a TIM (Thermal Interface Material).

The thermally conductive grease composition has an absolute viscosity of preferably 1,000 Pa ·s or more and 20,000 Pa ·s or less, more preferably 1,000 Pa ·s or more and 18,000 Pa ·s or less, even more preferably 1,000 Pa ·s or more and 15,000 Pa ·s or less, and further preferably 1,000 Pa ·s or more and 10,000 Pa ·s or less, the absolute viscosity being measured at 23°C with a B-type viscometer using a T-E spindle at a rotation speed of 5 rpm. As a result, the thermally conductive grease composition has high workability, and can be easily injected or applied between the heat generating body and the heat dissipating body.

In a heat shock test in which 0.4 g of the thermally conductive grease composition is placed between two plates, the plates are held in a heat shock tester such that main surfaces of the plates are perpendicular to the ground in a state in which the thermally conductive grease composition is sandwiched between the two plates such that a layer made of the thermally conductive grease composition has a thickness of 0.5 mm, and then 500 test cycles are performed, where one test cycle includes the following: the plates are held at -40°C for 30 minutes, heated to 125°C, held at 125°C for 30 minutes, and cooled to -40°C, it is preferable that the thermally conductive grease composition drops by a distance of 5 mm or less, from when the test is started. Accordingly, high drop resistance can be maintained.

The thermally conductive grease composition according to the present invention may contain, for example, a heat resistance improver, a flame retardant, a flame retardant assistant, or the like, as needed. Examples of the heat resistance improver includes red iron oxide, titanium oxide, or cerium oxide. The thermally conductive grease composition according to the present invention may contain organic or inorganic particle pigments for the purpose of coloring or toning, as needed. The thermally conductive grease composition according to the present invention may contain an alkoxy group-containing silicone for the purpose of surface treatment on a thermally conductive filler or the like, as needed. The thermally conductive grease composition according to the present invention does not particularly require a curing catalyst, and the thermally conductive grease composition according to the present invention is preferably a non-curing type grease.

The thermally conductive grease composition according to the present invention can be filled into dispensers, bottles, cans, tubes, and the like to form products.

In one aspect, the present invention relates to the use of the thermally conductive grease according to the present invention, in which the thermally conductive grease composition according to the present invention is interposed between a heat generating body and a heat dissipating body. In one aspect, the present invention relates to use of the thermally conductive grease according to the present invention, in which the thermally conductive grease composition according to the present invention is interposed between a heat generating body and a heat dissipating body, and the thermally conductive grease is sandwiched vertically between the heat generating body and the heat dissipating body. Examples of the heat generating body include electric components and electronic components such as semiconductor devices. Examples of the heat dissipating body include heat sinks.

### Examples

The following will be described using examples. The present invention is not limited to the examples. Various parameters were measured using the following methods.

### Thermal conductivity

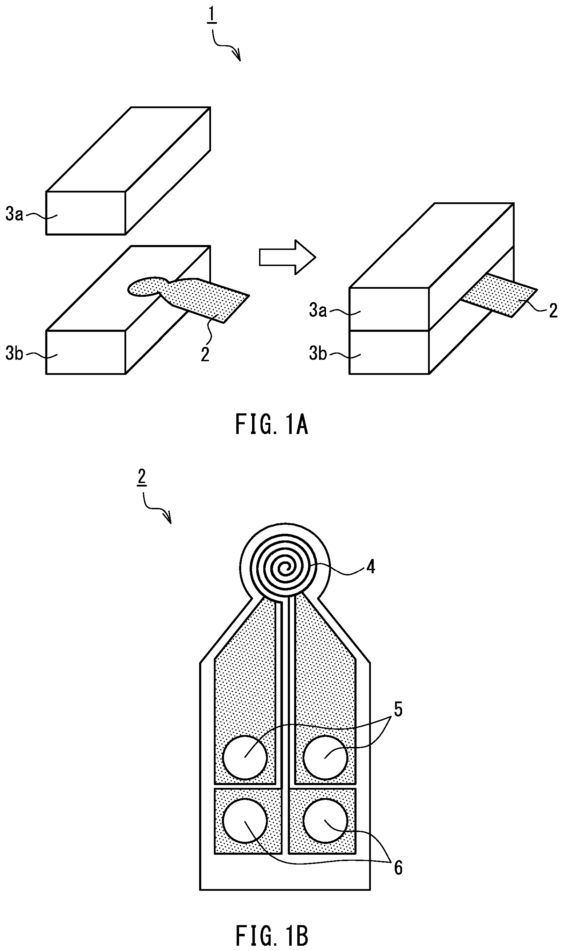

The thermal conductivity of the thermally conductive grease composition was measured using a hot disk method (conforming to ISO/CD 22007-2). As shown in FIG. 1A, a thermal conductivity measuring device 1 sandwiches a polyimide film sensor 2 between two samples 3a and 3b, applies a constant power to the sensor 2 to generate a constant amount of heat, and analyzes thermal properties from a temperature rise value of the sensor 2. The sensor 2 has a leading end 4 with a diameter of 7 mm, and as shown in FIG. 1B, has a double spiral electrode structure, in which electrodes 5 for applied current and electrodes 6 for resistance values (electrodes for temperature measurement) are arranged in a lower portion. The thermal conductivity is calculated using the following formula (Math. 1). $λ = \frac{Po ⋅ D \left(τ\right)}{{π}^{3 / 2} ⋅ r} ⋅ \frac{D \left(τ\right)}{ΔT \left(τ\right)}$
- λ: : Thermal conductivity (W/m ·K)
- P₀: : Constant power (W)
- r: : Radius of sensor (m)
- τ: : $\sqrt{α ⋅ t / {r}^{2}}$
- α: : Thermal diffusivity of sample (m²/s)
- t: : Measurement time (s)
- D(τ): : Nondimensionalized function of τ
- ΔT(τ): : Increase in temperature of sensor (K)

### Absolute viscosity of thermally conductive grease composition

The absolute viscosity of the thermally conductive grease composition was measured using a B-type viscometer (HBDV2T manufactured by Brookfield Corporation). AT-E spindle was used as the spindle, and the absolute viscosity was measured at 23°C at a rotation speed of 5 rpm (note that the rotation speed was 0.5 rpm in Comparative Examples 3 and 4).

### Drop test of thermally conductive grease composition

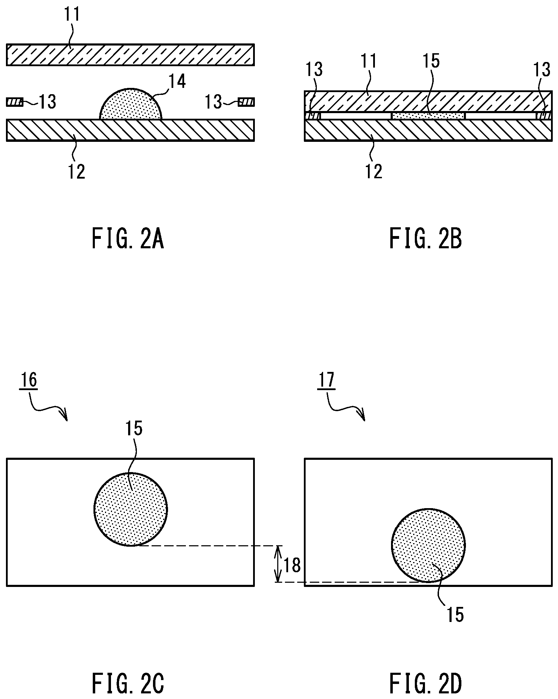

A drop test of the thermally conductive grease composition will be described using FIGS. 2A to 2D.

To an aluminum plate 12 with a vertical length of 40 mm, a horizontal length of 100 mm, and a thickness of 5 mm, 0.4 g of a thermally conductive grease composition 14 was applied (FIG. 2A). Spacers 13 were interposed between the aluminum plate and a glass plate 11 with a vertical length of 40 mm, a horizontal length of 100 mm, and a thickness of 5 mm, and the thermally conductive grease composition was sandwiched therebetween such that the thermally conductive grease composition had a thickness of 0.5 mm (FIG. 2B). In FIG. 2B, reference numeral 15 indicates the thermally conductive grease composition sandwiched between the two plates 11 and 12 to have a thickness of 0.5 mm. The aluminum plate 12 and the glass plate 11 were then placed in the heat cycle tester such that their main surfaces were perpendicular to the ground (FIG. 2C). Reference numeral 16 indicates a test piece before the test. In this state, one test cycle of holding the test piece at -40°C for 30 minutes, increasing the temperature to 125°C, holding the test piece at 125°C for 30 minutes, and then lowering the temperature to -40°C was repeated for 500 cycles. After 500 test cycles, the test piece was removed and observed to check whether the thermally conductive grease 15 had dropped. In FIG. 2D, reference numeral 17 indicates the test piece after the test, and reference numeral 18 indicates a drop distance. Note that the temperature transition time periods from -40°C to 125°C and from 125°C to -40°C were each within 10 minutes.

### Criteria

A: Grease dropped by a distance of 5 mm or less
B: Grease dropped by a distance of more than 5 mm

### Kinematic viscosity

In this application, the kinematic viscosity, including catalog values in the examples, refers to kinematic viscosity at 40°C measured with an Ubbelohde viscometer.

### Examples 1 to 3, Comparative Examples 1 to 3

### 1. Raw material components

### (1) Liquid dimethylpolysiloxane

Dimethyl silicone oil (product name "SH200CV 110CS", specific gravity of 0.97 g/cm³, manufactured by Dow Toray Co., Ltd.) having a kinematic viscosity of 110 mm²/s (catalog value) at 40°C was used as the liquid dimethylpolysiloxane (A).

### (2) Ethylene-propylene copolymer

An ethylene-propylene copolymer (product name "LUCANT HC-20", specific gravity of 0.83 g/cm³, manufactured by Mitsui Chemicals, Inc.) having a kinematic viscosity of 200 mm²/s (catalog value) at 40°C was used as the ethylene-propylene copolymer (B).

### (3) Thermally conductive filler

- Irregular pulverized alumina particles (surface-untreated) with a median particle size of 0.3 µm (D50 = 0.3 µm) were used, with 2.4 g of octyltrimethoxysilane adsorbed on 100 g of alumina (specific gravity was 3.98 g/cm³).
- Irregular pulverized alumina particles (surface-untreated) with a median particle size of 2.3 µm (D50 = 2.3 µm) were used, with 1.1 g of decyltrimethoxysilane adsorbed on 100 g of alumina (specific gravity was 3.98 g/cm³).
- Spherical alumina particles (no surface treatment, specific gravity was 3.98 g/cm³) with a median particle size of 105 µm (D50 = 105 µm) were used.
- Irregular aluminum nitride particles (no surface treatment, specific gravity was 3.26 g/cm³) with a median particle size of 15 µm (D50 = 15 pm) were used.

### (4) Viscosity modifier

- Decyltrimethoxysilane (specific gravity was 0.90 g/cm³) was used.

### 2. Mixing method

The liquid dimethylpolysiloxane, the ethylene-propylene copolymer, the thermally conductive filler, and the viscosity modifier were mixed to obtain compositions shown in Table 1 below, and thus, thermally conductive grease compositions were obtained.

The thermally conductive grease compositions obtained in the above manner were evaluated. The compositions and the evaluation results are collectively shown in Table 1 below.

**[Table 1]**

| | Ex. 1 | Ex. 2 | Ex. 3 | Comp. Ex. 1 | Comp. Ex. 2 | Comp. Ex. 3 | Comp. Ex. 4 |
|---|---|---|---|---|---|---|---|
| Dimethyl silicone oil, kinematic viscosity of 110 mm²/s (g) | 73 | 82 | 92 | 100.0 | 98 | 20 | - |
| Ethylene-propylene copolymer, kinematic viscosity of 200 mm²/s (g) | 27 | 18 | 8 | - | 2 | 80 | 100 |
| Irregular pulverized alumina D50 = 0.3 µm, surface-treated product (g) | 261 | 258 | 254 | 250 | 251 | 284 | 292 |
| Irregular pulverized alumina D50 = 2.3 µm, surface-treated product (g) | 366 | 361 | 355 | 350 | 351 | 397 | 409 |
| Spherical Alumina D50 = 105 µm (g) | 993 | 978 | 963 | 950 | 953 | 1078 | 1111 |
| Irregular aluminum nitride D50 = 15 µm (g) | 261 | 258 | 254 | 250 | 251 | 284 | 292 |
| Decyltrimethoxysilane (g) | 4 | 4 | 4 | 4 | 4 | 5 | 5 |
| Absolute Viscosity (B-type Viscometer) (Pa·s) | 7800 | 6000 | 4400 | 3000 | 3400 | 28000 | 56000 |
| Thermal Conductivity (W/m ·K) Hot Disk Method | 7.0 | 7.0 | 7.0 | 7.0 | 7.0 | 7.0 | 7.0 |
| Drop test (Heat shock, 100 h) | A | A | A | B | B | A | A |

The above results revealed that Examples 1 to 3 were thermally conductive grease compositions that exhibited low viscosity, yet were less likely to drip when sandwiched vertically. They also demonstrated high thermal conductivity, and the ability to be highly filled with a thermally conductive filler.

In contrast, no ethylene-propylene copolymer was added as the matrix resin in Comparative Example 1, and thus, the results of the drop test were poor. Since the content of the ethylene-propylene copolymer was low in Comparative Example 2, the results of the drop test were poor. Comparative Examples 3 and 4 had an excessively high content of the ethylene-propylene copolymer, leading to the problem of high viscosity.

### Industrial Applicability

The thermally conductive grease composition according to the present invention is suitable as a thermal interface material interposed between a heat dissipating body and a heat generating body such as an electric component or electronic component.

### Description of Reference Numerals

- 1: Thermal conductivity measuring device
- 2: Sensor
- 3a, 3b: Sample
- 4: Leading end of sensor
- 5: Electrode for applied current
- 6: Electrode for resistance value (electrode for temperature measurement)
- 11: Glass plate
- 12: Aluminum plate
- 13: Spacer
- 14: Thermally conductive grease composition
- 15: Thermally conductive grease composition sandwiched between two plates
- 16: Test piece before test
- 17: Test piece after test
- 18: Drop distance

## Claims

1. A thermally conductive grease composition comprising:
a matrix resin; and
a thermally conductive filler,
wherein the matrix resin comprises a liquid dimethylpolysiloxane (A) having a kinematic viscosity in a range from 100 to 10,000 mm²/s at 40°C, and an ethylene-propylene copolymer (B) having a kinematic viscosity in a range from 1 to 10,000 mm²/s at 40°C,
the matrix resin comprises the liquid dimethylpolysiloxane (A) in an amount in a range from 50 parts by mass to 97 parts by mass, and the ethylene-propylene copolymer (B) in an amount in a range from 3 parts by mass to 50 parts by mass, where a total amount of the liquid dimethylpolysiloxane (A) and the ethylene-propylene copolymer (B) is 100 parts by mass, and
the thermally conductive filler is present in an amount in a range from 400 to 2500 parts by mass with respect to 100 parts by mass of the total amount of the liquid dimethylpolysiloxane (A) and the ethylene-propylene copolymer (B).

2. The thermally conductive grease composition according to claim 1,
wherein the thermally conductive filler comprises alumina particles having a median particle size in a range from 1 µm to 5 µm in an amount in a range from 20 to 2000 parts by mass.

3. The thermally conductive grease composition according to claim 1 or 2,
wherein the thermally conductive filler comprises:
spherical alumina particles having a median particle size of more than 100 µm in an amount in a range from 20 to 1500 parts by mass;
aluminum nitride particles having a median particle size in a range from 5 µm to 50 µm in an amount in a range from 20 to 500 parts by mass;
irregular pulverized alumina particles having a median particle size in a range from 1 µm to 5 µm in an amount in a range from 20 to 1000 parts by mass; and
irregular pulverized alumina particles having a median particle size of 0.1 µm or more and less than 1 µm in an amount in a range from 20 to 500 parts by mass.

4. The thermally conductive grease composition according to any one of claims 1 to 3,
wherein the thermally conductive grease composition further comprises, as a viscosity modifier, an alkoxysilane compound represented by RₐSi(OR')₄₋ₐ, where R represents an unsubstituted or substituted organic group having 8 to 12 carbon atoms, R' represents an alkyl group having 1 to 4 carbon atoms, and a is 0 or 1, or a product obtained by partial hydrolysis thereof, in an amount in a range from 0.1 to 10 parts by mass with respect to 100 parts by mass of the total amount of the liquid dimethylpolysiloxane (A) and the ethylene-propylene copolymer (B).

5. The thermally conductive grease composition according to any one of claims 1 to 4,
wherein the thermally conductive filler is subjected to surface pretreatment with an alkoxysilane compound represented by RₐSi(OR')₄₋ₐ, where R represents an unsubstituted or substituted organic group having 8 to 12 carbon atoms, R' represents an alkyl group having 1 to 4 carbon atoms, and a is 0 or 1, or a product obtained by partial hydrolysis thereof.

6. The thermally conductive grease composition according to any one of claims 1 to 5,
wherein the thermally conductive grease composition has a thermal conductivity in a range from 1.0 W/m K to 10.0 W/m K.

7. The thermally conductive grease composition according to any one of claims 1 to 6,
wherein the thermally conductive grease composition has an absolute viscosity in a range from 1,000 to 20,000 Pa ·s at 23°C, the absolute viscosity being measured with a B-type viscometer.

8. The thermally conductive grease composition according to any one of claims 1 to 7,
wherein, in a heat shock test, 0.4 g of the thermally conductive grease composition is placed between two plates, the two plates are held in a heat shock tester such that main surfaces of the two plates are perpendicular to a ground in a state in which the thermally conductive grease composition is sandwiched between the two plates such that a layer made of the thermally conductive grease composition has a thickness of 0.5 mm, and then 500 test cycles are performed, where one test cycle comprises: holding the two plates at -40°C for 30 minutes, heating the two plates to 125°C, holding the two plates at 125°C for 30 minutes, and cooling the two plates to -40°C, wherein the thermally conductive grease composition drops by a distance of 5 mm or less, from when the heat shock test is started.

9. Use of the composition according to any one of claims 1 to 7 as a thermally conductive grease composition, wherein the composition is interposed between a heat generating body and a heat dissipating body, and the composition is sandwiched vertically between the heat generating body and the heat dissipating body.

## Patentansprüche

1. Wärmeleitfähige Schmierfettzusammensetzung, umfassend:
ein Matrixharz; und
einen wärmeleitfähigen Füllstoff,
wobei das Matrixharz ein flüssiges Dimethylpolysiloxan (A), aufweisend eine kinematische Viskosität in einem Bereich von 100 bis 10.000 mm²/s bei 40 °C, und ein Ethylen-Propylen-Copolymer (B), aufweisend eine kinematische Viskosität in einem Bereich von 1 bis 10.000 mm²/s bei 40°C, umfasst,
das Matrixharz das flüssige Dimethylpolysiloxan (A) in einer Menge in einem Bereich von 50 Massenteilen bis 97 Massenteilen, und das Ethylen-Propylen-Copolymer (B) in einer Menge in einem Bereich von 3 Massenteilen bis 50 Massenteilen umfasst, wobei die Gesamtmenge des flüssigen Dimethylpolysiloxans (A) und des Ethylen-Propylen-Copolymers (B) 100 Massenteile ist, und
der wärmeleitfähige Füllstoff in einer Menge im Bereich von 400 bis 2500 Massenteilen, in Bezug auf 100 Massenteile der Gesamtmenge des flüssigen Dimethylpolysiloxans (A) und des Ethylen-Propylen-Copolymers (B), vorhanden ist.

2. Wärmeleitfähige Schmierfettzusammensetzung nach Anspruch 1,
wobei der wärmeleitfähige Füllstoff Aluminiumoxidteilchen, aufweisend eine mittlere Teilchengröße im Bereich von 1 µm bis 5 µm, in einer Menge im Bereich von 20 bis 2000 Massenteilen umfasst.

3. Wärmeleitfähige Schmierfettzusammensetzung nach Anspruch 1 oder 2,
wobei der wärmeleitfähige Füllstoff Folgendes umfasst:
kugelförmige Aluminiumoxidteilchen, aufweisend eine mittlere Teilchengröße von mehr als 100 µm, in einer Menge in einem Bereich von 20 bis 1500 Massenteilen;
Aluminiumnitridteilchen, aufweisend eine mittlere Teilchengröße im Bereich von 5 µm bis 50 µm, in einer Menge im Bereich von 20 bis 500 Massenteile;
unregelmäßige pulverisierte Aluminiumoxidteilchen, aufweisend eine mittlere Teilchengröße im Bereich von 1 µm bis 5 µm, in einer Menge im Bereich von 20 bis 1000 Massenteilen; und
unregelmäßige pulverisierte Aluminiumoxidteilchen, aufweisend eine mittlere Teilchengröße von 0,1 µm oder mehr und weniger als 1 µm, in einer Menge in einem Bereich von 20 bis 500 Massenteilen.

4. Wärmeleitfähige Schmierfettzusammensetzung nach einem der Ansprüche 1 bis 3,
wobei die wärmeleitfähige Schmierfettzusammensetzung weiter als Viskositätsmodifizierungsmittel eine Alkoxysilanverbindung, repräsentiert durch RₐSi(OR')₄₋ₐ, wobei R eine unsubstituierte oder substituierte organische Gruppe mit 8 bis 12 Kohlenstoffatomen repräsentiert, R' eine Alkylgruppe, aufweisend 1 bis 4 Kohlenstoffatome, repräsentiert und a 0 oder 1 ist, oder ein durch partielle Hydrolyse davon erhaltenes Produkt in einer Menge im Bereich von 0,1 bis 10 Massenteile, in Bezug auf 100 Massenteile der Gesamtmenge des flüssigen Dimethylpolysiloxans (A) und des Ethylen-Propylen-Copolymers (B) umfasst.

5. Wärmeleitfähige Schmierfettzusammensetzung nach einem der Ansprüche 1 bis 4,
wobei der wärmeleitfähige Füllstoff einer Oberflächenvorbehandlung mit einer Alkoxysilanverbindung, repräsentiert durch RₐSi(OR')₄₋ₐ, wobei R eine unsubstituierte oder substituierte organische Gruppe, aufweisend 8 bis 12 Kohlenstoffatome, repräsentiert, R' eine Alkylgruppe, aufweisend 1 bis 4 Kohlenstoffatome, repräsentiert, und a 0 oder 1 ist, oder einem Produkt, das durch partielle Hydrolyse davon erhalten wird, unterzogen wird.

6. Wärmeleitfähige Schmierfettzusammensetzung nach einem der Ansprüche 1 bis 5,
wobei die wärmeleitfähige Schmierfettzusammensetzung eine Wärmeleitfähigkeit in einem Bereich von 1,0 W/m·K bis 10,0 W/m·K aufweist.

7. Wärmeleitfähige Schmierfettzusammensetzung nach einem der Ansprüche 1 bis 6,
wobei die wärmeleitfähige Schmierfettzusammensetzung eine absolute Viskosität in einem Bereich von 1.000 bis 20.000 Pa·s bei 23 °C aufweist, wobei die absolute Viskosität mit einem Viskosimeter vom Typ B gemessen wird.

8. Wärmeleitfähige Schmierfettzusammensetzung nach einem der Ansprüche 1 bis 7,
wobei, in einem Wärmeschocktest 0,4 g der wärmeleitfähigen Schmiermittelzusammensetzung zwischen zwei Platten platziert werden, die zwei Platten in einem Wärmeschocktester so gehalten werden, dass die Hauptoberflächen der zwei Platten senkrecht zu einem Boden in einem Zustand sind, in dem die wärmeleitfähige Schmiermittelzusammensetzung zwischen den zwei Platten eingeschoben ist, so dass eine Schicht, gemacht aus der wärmeleitfähigen Schmiermittelzusammensetzung, eine Dicke von 0,5 mm aufweist, und dann 500 Testzyklen durchgeführt werden, wobei ein Testzyklus Folgendes umfasst: Halten der zwei Platten bei -40 °C für 30 Minuten, Erhitzen der zwei Platten auf 125 °C, Halten der zwei Platten bei 125 °C für 30 Minuten, und Abkühlen der zwei Platten auf -40 °C, wobei die wärmeleitfähige Schmierfettzusammensetzung um eine Entfernung von 5 mm oder weniger abtropft, wenn der Wärmeschocktest gestartet wird.

9. Verwendung der Zusammensetzung nach einem der Ansprüche 1 bis 7 als eine wärmeleitfähige Schmierfettzusammensetzung, wobei die Zusammensetzung zwischen einem wärmeerzeugenden Körper und einem wärmeableitenden Körper eingefügt ist, und die Zusammensetzung vertikal zwischen dem wärmeerzeugenden Körper und dem wärmeableitenden Körper eingeschoben ist.

## Revendications

1. Composition de graisse thermoconductrice comprenant :
une résine matricielle ; et
une charge thermoconductrice,
dans laquelle la résine matricielle comprend un diméthylpolysiloxane liquide (A) présentant une viscosité cinématique dans une plage allant de 100 à 10 000 mm²/s à 40 °C, et un copolymère éthylène-propylène (B) présentant une viscosité cinématique dans une plage allant de 1 à 10 000 mm²/s à 40 °C,
la résine matricielle comprend le diméthylpolysiloxane liquide (A) dans une teneur dans une plage allant de 50 parties en masse à 97 parties en masse, et le copolymère éthylène-propylène (B) dans une teneur dans une plage allant de 3 parties en masse à 50 parties en masse, la teneur totale du diméthylpolysiloxane liquide (A) et du copolymère éthylène-propylène (B) étant de 100 parties en masse, et
la charge thermoconductrice est présente dans une teneur dans une plage allant de 400 à 2 500 parties en masse par rapport à 100 parties en masse de la teneur totale du diméthylpolysiloxane liquide (A) et du copolymère éthylène-propylène (B).

2. Composition de graisse thermoconductrice selon la revendication 1,
dans laquelle la charge thermoconductrice comprend des particules d'alumine présentant une taille médiane de particule dans une plage allant de 1 µm à 5 µm dans une teneur dans une plage allant de 20 à 2 000 parties en masse.

3. Composition de graisse thermoconductrice selon la revendication 1 ou la revendication 2,
dans laquelle la charge thermoconductrice comprend :
des particules sphériques d'alumine présentant une taille médiane de particule de plus de 100 µm dans une teneur dans une plage allant de 20 à 1 500 parties en masse ;
des particules de nitrure d'aluminium présentant une taille médiane de particule dans une plage allant de 5 µm à 50 µm dans une teneur dans une plage allant de 20 à 500 parties en masse ;
des particules d'alumine pulvérisées irrégulières présentant une taille médiane de particule dans une plage allant de 1 µm à 5 µm en une teneur dans une plage allant de 20 à 1 000 parties en masse ; et
des particules d'alumine pulvérisées irrégulières présentant une taille médiane de particule de 0,1 µm ou plus et de moins de 1 µm dans une teneur dans une plage allant de 20 à 500 parties en masse.

4. Composition de graisse thermoconductrice selon l'une quelconque des revendications 1 à 3,
dans laquelle la composition de graisse thermoconductrice comprend en outre, en tant que modificateur de viscosité, un composé alkoxysilane représenté par RₐSi(OR')₄₋ₐ, dans lequel R représente un groupe organique non substitué ou substitué présentant 8 à 12 atomes de carbone, R' représente un groupe alkyle présentant 1 à 4 atomes de carbone, et a est 0 ou 1, ou un produit obtenu par hydrolyse partielle de celui-ci, dans une teneur dans une plage allant de 0,1 à 10 parties en masse par rapport à 100 parties en masse de la teneur totale du diméthylpolysiloxane liquide (A) et du copolymère éthylène-propylène (B).

5. Composition de graisse thermoconductrice selon l'une quelconque des revendications 1 à 4,
dans laquelle la charge thermoconductrice est soumise à un prétraitement de surface avec un composé alkoxysilane représenté par RₐSi(OR')₄₋ₐ, dans lequel R représente un groupe organique non substitué ou substitué présentant 8 à 12 atomes de carbone, R' représente un groupe alkyle présentant 1 à 4 atomes de carbone, et a est 0 ou 1, ou un produit obtenu par hydrolyse partielle de celui-ci.

6. Composition de graisse thermoconductrice selon l'une quelconque des revendications 1 à 5,
dans laquelle la composition de graisse thermoconductrice présente une conductivité thermique dans une plage allant de 1,0 W/m·K à 10,0 W/m·K.

7. Composition de graisse thermoconductrice selon l'une quelconque des revendications 1 à 6,
dans laquelle la composition de graisse thermoconductrice présente une viscosité absolue dans une plage allant de 1 000 à 20 000 Pa·s à 23 °C, la viscosité absolue étant mesurée au moyen d'un viscosimètre de type B.

8. Composition de graisse thermoconductrice selon l'une quelconque des revendications 1 à 7,
dans laquelle, dans un essai de choc thermique, 0,4 g de la composition de graisse thermoconductrice est placé entre deux plaques, les deux plaques étant maintenues dans un appareil d'essai de choc thermique de telle sorte que les surfaces principales des deux plaques soient perpendiculaires au sol dans un état dans lequel la composition de graisse thermoconductrice est intercalée entre les deux plaques de telle sorte qu'une couche constituée de la composition de graisse thermoconductrice présente une épaisseur de 0,5 mm, puis 500 cycles d'essai sont effectués, un cycle d'essai comprenant : le maintien des deux plaques à -40 °C pendant 30 minutes, le chauffage des deux plaques à 125 °C, le maintien des deux plaques à 125 °C pendant 30 minutes, et le refroidissement des deux plaques à -40 °C, dans laquelle la composition de graisse thermoconductrice s'affaisse sur une distance de 5 mm ou moins, à compter du début de l'essai de choc thermique.

9. Utilisation de la composition selon l'une quelconque des revendications 1 à 7 en tant que composition de graisse thermoconductrice, dans laquelle la composition est intercalée entre un corps générateur de chaleur et un corps dissipateur de chaleur, et la composition est intercalée verticalement entre le corps générateur de chaleur et le corps dissipateur de chaleur.
